# EUROPÄISCHE PATENTSCHRIFT

(11) **EP 2 282 065 B1**
(45) Veröffentlichungstag und Bekanntmachung des Hinweises auf die Patenterteilung: **16.05.2012**
(21) Anmeldenummer: 09009882.3
(22) Anmeldetag: 30.07.2009
(51) Int. Cl.: F15B 13/01, F15B 13/04

(54) **Hydraulisches Umschaltsitzventil und Leistungs-Trennschaltvorrichtung**
Hydraulic switching valve and circuit breaker device
Soupape à siège de commutation hydraulique et dispositif de section de puissance

(43) Veröffentlichungstag der Anmeldung: 09.02.2011
(73) Patentinhaber: HAWE Hydraulik SE, 81673 München (DE)
(72) Erfinder: Jemüller, Georg, 81673 München (DE); Steinhauser, Markus, 81543 München (DE)
(74) Vertreter: Grünecker, Kinkeldey, Stockmair & Schwanhäusser

(56) Entgegenhaltungen:
- DE-A1- 3 345 720
- US-A1- 2008 072 978

## Beschreibung

Die Erfindung betrifft ein hydraulisches Umschaltsitzventil gemäß Oberbegriff des Patentanspruchs 1 sowie eine Leistungs-Trennschaltvorrichtung gemäß Patentanspruch 15.

An solche Umschaltsitzventile bzw. Leistungs-Trennschaltvorrichtungen werden extreme Anforderungen hinsichtlich Standzeit und Zuverlässigkeit sowie der Umschaltzeit des Umschaltsitzventils gestellt. Beispielsweise wird eine wartungsfreie Standzeit von bis zu etwa 30 Jahren erwartet, und eine Umschaltzeit des Umschaltsitzventils zumindest in die Schaltstellung für eine Trennung der Kontakte von nur 10 Millisekunden oder weniger. Diese Forderungen lassen sich nur schwer erfüllen, wenn im Umschaltsitzventil und an den Kontakten frühzeitig Verschleiß entsteht.

Bei dem aus DE 33 45 720 A bekannten Umschaltsitzventil einer Leistungs-Trennschaltvorrichtung sind Kammerenden, deren Volumina durch die Bewegung des Kolbens in die jeweilige Schaltstellung verändert werden, zwar mit dem Tank verbunden oder verbindbar. Jedoch strömt ausgeschobenes Druckmittel dann im Wesentlichen ungedrosselt zum Tank ab. Beim Erreichen der jeweiligen Schaltstellung ergibt sich ein harter Aufschlag der Sitzfläche am Kolben gegen den Ventilsitz im Gehäuse, was frühzeitigen Verschleiß bedingt.

Aus US 2008/0072978 A1 ist ein direkt magnetbetätigtes Druckregelventil in Schieberbauweise bekannt, dessen Schieberkolben in bestimmten Steuerphasen zu axialen Vibrationen angeregt wird. Zum Abdämpfen dieser Vibrationen steht ein Kammerende über eine Festdrossel mit gleichbleibender Drosselwirkung mit einer Niederdruckseite in Verbindung. Bei Vibrationen des Schieberkolbens wird abwechselnd Öl aus dem Kammerende durch die Drossel ausgeschoben und angesaugt, um die Vibrationen des Schieberkolbens zu dämpfen. Der Schieberkolben wird durch den Betätigungsmagneten gegen Federkraft zwischen unterschiedlichen Relativpositionen in der Kammer verstellt.

Bei dem aus EP 1 302 958 A bekannten Umschaltsitzventil einer Leistungs-Trennschaltvorrichtung wird der Kolben über die Druckvorsteuerung mittels in entgegengesetzten Richtungen wirksamer Schaltflächen bewegt, auf denen der Druck im Druckanschluss und in entgegengesetzter Richtung der Vorsteuerdruck oder nach Abbau des Vorsteuerdruckes nur der Druck im Druckanschluss wirkt. Da der Kolben stark beschleunigt wird und die Trenn-Schaltstellung mit maximaler Geschwindigkeit erreicht, findet zwischen der Sitzfläche am Kolben und dem Ventilsitz ein harter Aufschlag statt, der am Ventilsitz Verschleiß hervorrufen kann. Da außerdem bei der Bewegung des Kolbens über eine bestimmte Zeit der Verbraucheranschluss sowohl mit dem Druckanschluss als auch dem Tankanschluss verbunden ist, kann im System wenigstens ein Druckschlag auftreten, der u.a. deswegen unerwünscht ist, weil er zu einer Verzögerung der Trennbewegung der Kontakte führen kann, wodurch die dem entstehenden Funken oder Lichtbogen ausgesetzten Kontakte stark verschleißen können.

Bei dem aus EP 373 598 bekannten Umschaltsitzventil sind anschließend an die Sitzflächen des Kolbens kreiszylindrische Ringflächen vorgesehen, die mit der Innenwand der Kammer jeweils über einen bestimmten Hubabschnitt des Kolbens stromregelnd zusammenwirken. Diese Ringflächen sind so ausgebildet, dass zu keiner Zeit der Verbraucheranschluss sowohl mit dem Tankanschluss als auch dem Druckanschluss verbunden ist. Dies erhöht jedoch die Umschaltzeit des Umschaltsitzventils unzweckmäßig. Außerdem lassen sich weder ein harter Aufschlag der Sitzfläche auf den Ventilsitz noch ein Druckschlag im System zuverlässig vermeiden.

Bei dem aus EP 1 801 473 A bekannten Umschaltsitzventil sind am Kolben zusätzliche bauliche Maßnahmen mit Nuten und Bunden vorgesehen, um nach der Bewegungsphase des Kolbens, in welcher der Arbeitsanschluss mit dem Tankanschluss und dem Druckanschluss verbunden ist, bei der Bewegung in die Trenn-Schaltstellung während einer festgelegten Zeitspanne zunächst nur einen konstanten gedrosselten Strömungsquerschnitt für das Hydraulikmedium freizugeben, der kleiner ist als der Maximalströmungsquerschnitt. Gegebenenfalls wird sogar der Kolben in einer Zwischenstellung vorübergehend festgehalten. Dies erhöht die Umschaltzeit des Umschaltsitzventils unzweckmäßig, und kann einen harten Aufschlag und Druckschläge nicht zuverlässig ausschließen.

Weiterer Stand der Technik ist enthalten in EP 0 074 419 A.

Der Erfindung liegt die Aufgabe zugrunde, ein Umschaltsitzventil der eingangs genannten Art mit kurzer Umschaltzeit zumindest in die Trenn-Schaltstellung, sowie eine Leistungs-Trennschaltvorrichtung anzugeben, die sich durch lange Standzeit auszeichnet.

Die gestellte Aufgabe wird mit den Merkmalen des Patentanspruchs 1 und des Patentanspruchs 15 gelöst.

Indem das Druckmittelvolumen durch zumindest die eine Drosselstelle und den Strömungsweg zum Tank verdrängt wird, lässt sich nicht nur der Aufschlag der Sitzfläche auf den Ventilsitz so dämpfen, dass unzweckmäßiger Verschleiß des Ventilsitzes unterbleibt, sondern werden überraschend Druckschläge minimiert, so dass keine Verzögerung bei der Trennbewegung der Kontakte eintritt und der Verschleiß an den Kontakten vermindert ist. Dies erhöht die Standzeit des Umschaltsitzventils sowie der Leistungs-Trennschaltvorrichtung. Dabei nimmt die Drosselwirkung in Hubrichtung des Kolbens zu, beispielsweise proportional zum Hub, so dass die Dämpfwirkung am stärksten ist, wenn die Sitzfläche den Ventilsitz erreicht. Dies muss nicht notwendigerweise eine Verzögerung der Bewegung des Kolbens bedeuten, sondern nur eine zunehmende Verringerung der Kraft, mit der die Sitzfläche an den Ventilsitz gebracht wird.

In der Leistungs-Trennschaltvorrichtung werden durch das Verdrängen des Druckmittelvolumens über die Drosselstelle und den Strömungsweg zum Tank die Bewegung des Kolbens zum Ventilsitz gedämpft und so der Ventilsitz geschont, und werden überraschend auch Druckschläge im System gemildert oder weitgehend unterbunden. Die Dämpfung hat ihre stärkste Wirkung erst dann oder beginnt zweckmäßig erst dann einzusetzen, wenn der Verbraucheranschluss bereits mit dem Tankanschluss verbunden ist, so dass auch wegen ausbleibender oder stark gemilderter Druckschläge die Trennbewegung der Kontakte, nachdem diese bereits voneinander gelöst sind, nicht unzweckmäßig verzögert wird, sondern kontinuierlich und rasch abläuft, so dass Verschleiß an den Kontakten durch den entstehenden Funken oder Lichtbogen verringert ist. Auf diese Weise lassen sich hohe Anforderungen an die Standzeit der Leistungs-Trennschaltvorrichtung problemlos erfüllen.

Zweckmäßig wirkt die Dämpfung der über den Druck im Druckanschluss am Kolben generierten Umschaltkraft erst dann zunehmend entgegen, wenn der Kolben bereits ausreichend beschleunigt worden ist und der Verbraucheranschluss bereits mit dem Tankanschluss in Verbindung steht, damit die Kontakttrennung so früh wie möglich beginnt und bereits zugig abläuft, wenn der Kolben gedämpft wird.

Bei einer zweckmäßigen Ausführungsform ist die Drosselstelle im Kolben angeordnet. Der Strömungsweg zum Tank verläuft von der Drosselstelle im Inneren des Kolbens bis zum ersten, mit dem Tankanschluss verbundenen Kammerende zum dort befindlichen ersten Kolbenstirnende. Das verdrängte Druckmittelvolumen nutzt hierbei ohne zusätzliche Kanäle im Gehäuse den ohnedies vorhandenen Tankanschluss.

Dabei kann im zweiten Kammerende ein stationärer Ansatz angeordnet sein, der in eine im Kolbenstirnende geformte Innenkammer eintaucht und zusammen mit einer Ringfläche des zweiten Kolbenstirnendes einen Ringraum und damit das zu verdrängende Druckmittelvolumen auf ein für die gewünschte Dämpfung zweckmäßiges Maß begrenzt. Die Drosselstelle wird zwischen dem Ansatz und der Innenkammer gebildet, wobei vorzugsweise, der Strömungsweg in der Innenkammer mündet. Auch um Bauraum zu sparen, wird im Inneren des Kolbens nutzbarer Bauraum zum Unterbringen der Drosselstelle und des Strömungsweges genutzt.

Herstellungstechnisch günstig weist der Strömungsweg entweder wenigstens eine, vorzugsweise gegenüber der Achse des Kolbens schräge oder achsparallele Bohrung oder zwei zur Achse parallele, gegeneinander versetzte und miteinander verschnittene Bohrungen auf.

In dieser Ausführungsform weist der Ansatz am Stirnende einen im Wesentlichen kreiszylindrischen Bund mit einer axialen Länge etwa entsprechend der Tiefe der als Bohrung ausgebildeten Innenkammer auf. Dies sind herstellungstechnisch günstige Baumaßnahmen. Zwischen dem Bund und der Wand der Innenkammer wird ein Drosselspalt vorgesehen, der die Drosselstelle bildet. Die Drosselwirkung der Drosselstelle nimmt bei in etwa gleichbleibendem Drosselspalt mit hubabhängig zunehmender axialer Überdeckung im Drosselspalt zu, um die stärkste Dämpfung erst dann zu entwickeln, wenn die Sitzfläche im Begriff ist, auf den Ventilsitz aufzusetzen. Die Dämpfwirkung soll erst einsetzen, wenn der Arbeitsan-schluss bereits mit dem Tankanschluss verbunden ist.

Eine weitere wichtige Anforderung an solche Umschaltsitzventile kann eine Selbsthaltung in beiden Schaltstellungen sein, damit der Kolben, z.B. bei der Montage des Umschaltventils am oder beim Transport des Umschaltsitzventils zum Einbauort, nicht aufgrund äußerer Einflüsse eine Zwischenstellung einnimmt und bei Betriebsaufnahme nicht mehr funktionsfähig ist. Dies wird bei einer weiteren zweckmäßigen Ausführungsform baulich einfach dadurch erreicht, dass zwischen dem für die Dämpfung verwendeten Ansatz und der Innenkammer eine mechanische Verrastung vorgesehen ist, beispielsweise eine federbelastete Kugelverrastung, die in Beiden Schaltstellungen des Kolbens greift, im Betrieb aber problemlos jeweils durch die Druckvorsteuerung des Kolbens gelöst wird.

Bei einer anderen, zweckmäßigen Ausführungsform ist die Drosselstelle zwischen dem Kolben und der Wand der Kammer angeordnet. Der Strömungsweg zum Tank verläuft von der Drosselstelle in einem die Kammer begrenzenden Gehäuse, vorzugsweise beginnend an einem weiteren Tankanschluss in der Wand der Kammer. Für die Dämpfungsfunktion sind keine nennenswerten Modifikationen an einem bewährten Ausbildungskonzept des Kolbens erforderlich.

In diesem Fall kann der Kolben am Kolbenstirnende eine zumindest im Wesentlichen kreiszylindrische Drosselfläche aufweisen, die mit der Wand der Kammer einen mit dem Strömungsweg kommunizierenden Drosselspalt für das aus dem zweiten Kammerende oder aus einem Teil des zweiten Kammerendes verdrängte Druckmittelvolumen bildet. Hierbei kann die Drosselwirkung bei zumindest im Wesentlichen gleichbleibendem Drosselspalt mit hubabhängig zunehmender axialer Überdeckung zwischen der Drosselfläche und der Kammerwand zunehmen, um die maximale Dämpfung erst gegen Ende des Hubweges des Kolbens zu erzeugen, und auch erst einsetzen, wenn zuvor der Arbeitsanschluss mit dem Tankanschluss verbunden ist.

Es kann auch vorgesehen werden, durch eine Schulter am Kolben eine umfängliche, z.B. radiale, Steuerfläche oder Steuerkante zu bilden, die die Mündung des Strömungsweges mit zunehmender axialer Überdeckung blendenartig zunehmend abdrosselt. Es ist möglich, ohne Drosselspalt zwischen axialen Drosselflächen auszukommen, und nur über die Blendenwirkung abzudrosseln, oder die Blendenwirkung und den Drosselspalt zu kombinieren.

Auch bei dieser Ausführungsform kann im zweiten Kammerende ein stationärer Ansatz angeordnet sein, der mit Spiel in eine Innenkammer im zweiten Kotbenstirnende eintaucht und mit einer Ringfläche am zweiten Kolbenstirnende im zweiten Kammerende einen Ringraum begrenzt. Um die Anforderung an die Selbsthaltung des Umschaltsitzventils zu erfüllen, kann zwischen dem Kolben und dem Ansatz eine mechanische Verrastung vorgesehen sein, vorzugsweise eine federbelastete Kugelverrastung, die in beiden Schaltstellungen des Kolbens positionierend greift.

Bei einer zweckmäßigen Ausführungsform wird sogar zwischen dem Ansatz und dem Kolben eine zweite, flankierend dämpfende Drosselstelle zusätzlich vorgesehen, um zwei Dämpfungsstufen zu erzielen.

Ferner kann es zweckmäßig sein, den Ansatz im zweiten Kammerende quer zur Kolbenachse schwimmend zu lagern, um aus der Zusammenarbeit zwischen dem Kolben und dem Ansatz Klemmkräfte zu vermeiden, die eine leichtgängige Bewegung des Kolbens beeinträchtigen könnten.

Bei einer weiteren Ausführungsform ist dem Umschaltsitzventil druckseitig und tankseitig jeweils eine Stelldrossel, z.B. zum Einstellen der Umschaltgeschwindigkeit, zugeordnet. Hierbei wirkt sich die Dämpfung aufgrund des durch die Drosselstelle verdrängten Druckmittelvolumens besonders zur Vermeidung von Druckschlägen gewinnbringend aus, falls an der tankseitigen Stelldrossel eine starke Drosselwirkung eingestellt sein sollte.

Ausführungsformen des Erfindungsgegenstandes werden anhand der Zeichnungen erläutert. Es zeigen:
- Fig. 1: ein Blockschaltbild einer Leistungs-Trennschaltvorrichtung mit einem hydrauli- schen Umschaltsitzventil,
- Fig. 2: einen Längsschnitt einer Ausführungsform des Umschaltsitzventils in einer Schaltstellung, in welcher Kontakte der Leistungs-Trennschaltvorrichtung ge- schlossen sind,
- Fig. 3: eine weitere Ausführungsform,
- Fig. 4: eine weitere Ausführungsform,
- Fig. 5: eine weitere Ausführungsform, und
- Fig. 6: eine weitere Ausführungsform, jeweils in einem Axialschnitt.

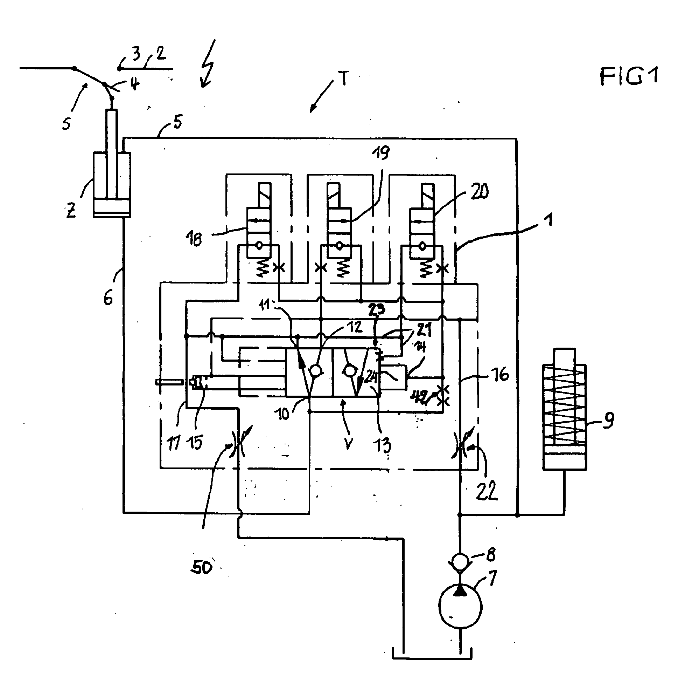

Fig. 1 zeigt als Blockschaltbild eine Leistungs-Trennschaltvorrichtung T mit einer elektrohydraulischen Steuervorrichtung 1. Die Leistungs-Trennschaltvorrichtung T ist einer stromführenden Leitung 2 zugeordnet, in der ein Trennschalter S angeordnet ist, der Kontakte 3, 4 aufweist. Der Kontakt 4 ist mittels eines Hydraulikzylinders Z zwischen der gezeigten Trennstellung und einer Schließstellung verstellbar. Der Hydraulikzylinder Z ist beispielsweise ein doppelseitig beaufschlagbarer Differentialzylinder, dessen kolbenstangenseitige Kammer über eine Arbeitsleitung 5 an eine von einer Druckquelle 7 über ein Rückschlagventil 8 und, vorzugsweise, einen Druckspeicher 9 gespeiste Druckleitung 16 angeschlossen ist, während die kolbenseitige Kammer über eine Arbeitsleitung 6 an einen Arbeitsanschluss 10 eines Umschaltsitzventils V angeschlossen ist.

Das Umschaltsitzventil V weist einen Tankanschluss 11 zu einer Tankleitung 17, einen Druckanschluss 12, verbunden mit der Druckleitung 16, und einen Vorsteueranschluss 14 auf, der mit einem Vorsteuerventil 20 verbunden ist, und gegebenenfalls mit der Tankleitung 17 verbindbar ist. Ferner enthält das Umschaltsitzventil V einen Kolben 13, der druckvorgesteuert zwischen zwei Schaltstellungen hin- und herbewegbar ist, und in Fig. 1 in der Schaltstellung gezeigt wird, in welcher der Arbeitsanschluss 10 mit dem Tankanschluss 11 verbunden ist (Trenn-Schaltstellung). In der anderen Schaltstellung wird der Arbeitsanschluss 10 mit dem Druckanschluss 12 verbunden, während der Tankanschluss 11 abgesperrt ist. Dem Kolben 13 ist eine erste Umschaltfläche 15 zugeordnet, die mit dem Druck aus der Druckleitung 16 beaufschlagbar ist, um den Kolben 13 in die in Fig. 1 gezeigte Trenn-Schaltstellung zu bewegen, sowie eine zweite, beispielsweise ringförmige Umschaltfläche 24, die größer ist als die erste Schaltfläche 15 und in entgegengesetzter Richtung aus dem Vorsteueranschluss 14 beaufschlagbar ist. Ferner sind zwei weitere Vorsteuerventile 18, 19 vorgesehen, an die der Vorsteueranschluss 14 ebenfalls angeschlossen ist. Das Vorsteuerventil 18 und aus Redundanz-Gründen z.B. das parallele Vorsteuerventil 20, trennen in der gezeigten Schaltstellung (2/2-Wege-Magnetschaltventile) den Vorsteueranschluss 14 von der Tankleitung 17, verbinden hingegen in ihren anderen Schaltstellungen den Vorsteueranschluss 14 und die Tankleitung 17, so dass das Umschaltsitzventil V in die gezeigte Schaltstellung geschaltet wird. Der Schalter S wird geöffnet. Das Vorsteuerventil 19 trennt in der gezeigten Schaltstellung den Vorsteueranschluss 14 vom Druckanschluss 12, und stellt in der anderen magnetbetätigten Schaltstellung eine Verbindung zwischen dem Druckanschluss 12 und dem Vorsteueranschluss 14 her. Das Umschaltventil V wird daraufhin über die Umschaltfläche 24 in die andere Schaltstellung gebracht. Der Schalter S wird geschlossen. Zwischen dem Arbeitsanschluss 10 und dem Vorsteueranschluss 14 ist zum Volumenausgleich des Vorsteuervolumens mindestens eine Düse 49 in einer Leitungsschleife angeordnet. Dadurch braucht nach dem Öffnen oder Schließen des Schalters S keines der Vorsteuerventile 18, 19, 20 mehr betätigt zu werden.

In der in Fig. 1 gezeigten Schaltstellung ist der Vorsteueranschluss 14 zur Tankleitung 17 entlastet, ist die erste Umschaltfläche 15 mit dem Druck aus der Druckleitung 16 beaufschlagt, ist der Druckanschluss 12 von der Leitungsschleife getrennt, und ist auch die Leitungsschleife mit dem Vorsteueranschluss 14 über die Düsen verbunden. Die kolbenseitige Kammer des Hydraulikzylinders Z ist entlastet, während die kolbenstangenseitige Kammer mit dem Druck aus der Druckleitung 16 bzw. dem Druckspeicher 9 beaufschlagt wird, so dass der Kontakt 4 in der Trennstellung gehalten ist.

Ist der Kontakt 4 gegen den Kontakt 3 zu bringen (Schalter S schließen), wird beispielsweise das Vorsteuerventil 19 umgeschaltet, um den Vorsteueranschluss 14 und damit die zweite Umschaltfläche 24 mit Druck zu beaufschlagen und den Kolben 13 gegen die Kraft an der ersten Umschaltfläche 15 in die andere Schaltstellung zu bewegen. Der sich über die Arbeitsleitung 6 in der kolbenseitigen Kammer des Hydraulikzylinders Z aufbauende Druck schiebt den Kolben gegen den Druck in der kolbenstangenseitigen Kammer nach oben, bis der Kontakt 4 den Kontakt 3 erreicht hat.

Ist der Kontakt 4 vom Kontakt 3 zu trennen (Schalter S öffnen), ist das Vorsteuerventil 18 und/oder 20 zu betätigen. Damit wird wieder die in Fig. 1 gezeigte Schaltstellung hergestellt. Der Druck auf die zweite Umschaltfläche 24 bricht rasch zusammen, so dass sich der Kolben 13 schnell in die in Fig. 1 gezeigte Schaltstellung bewegt, und der Druck in der kolbenseitigen Kammer des Hydraulikzylinders Z zum Tank abgebaut wird, während der Druck in der kolbenstangenseitigen Kammer den Kolben sehr schnell und kontinuierlich in die Stellung von Fig. 1 bringt und der Schalter S geöffnet wird.

Die Druckquelle 7 ist beispielsweise eine Konstantpumpe mit relativ geringer Fördermenge vor allem zum Laden des Druckspeichers 9, und kann bei Betätigen der Trennschaltvorrichtung T gegebenenfalls abgeschaltet werden. Im Umschaltsitzventil V können Drücke bis zu 500 bar oder mehr entstehen, und Fördermengen von 1000 I/min oder mehr bewegt werden. Die Umschaltzeit des Umschaltsitzventils V in die Trenn-Schaltstellung sollte zwischen etwa 10 bis 12 Millisekunden betragen, oder sogar unter 10 Millisekunden liegen.

Der vorbeschriebene Aufbau der Leistungs-Trennschaltvorrichtung T ist bekannt. Erfindungsgemäß sind ein zusätzlicher Strömungsweg 21 zum Tank oder zur Tankleitung 17, sowie wenigstens eine Drosselstelle 23 für ein vom Kolben 13 bei dessen Bewegung in die zweite Schaltstellung (nicht die Schaltstellung von Fig. 1) durch ein Kolbenstirnende oder zumindest einen Teil des Kolbenstirnendes verdrängtes Druckmittelvolumen vorgesehen, um den Kolben 13 zumindest dann zu dämpfen (z.B. durch Aufbauen einer Gegenkraft zur Kraft der Umschaltfläche 15), wenn der Tankanschluss 11 bereits mit dem Arbeitsanschluss 10 verbunden ist, und der Hydraulikzylinder Z seine Bewegung zur in Fig. 1 gezeigten Trennstellung aufgenommen hat. Die Drosselstelle 23 entwickelt, vorzugsweise, eine abhängig vom Hub des Kolbens 13 zu der zweiten Schaltstellung zunehmende Drosselwirkung, die am stärksten ist, wenn der Kolben 13 seine zweite Schaltstellung erreicht. Indirekt dämpft somit die Drosselstelle 23 die Kraft, die durch die Beaufschlagung der ersten Umschaltfläche 15 mit dem Druck aus der Druckleitung 16 entwickelt wird, während die zweite Umschaltfläche 24 dann nicht mit Druck aus dem Vorsteueranschluss 14 beaufschlagt ist. Die Drosselwirkung der Drosselstelle 23 sollte erst einsetzen, wenn bei der Bewegung des Kolbens 13 zur zweiten Schaltstellung der Arbeitsanschluss 10 bereits ausreichend großquerschnittig mit dem Tankanschluss 11 verbunden ist, so dass wegen möglichst rascher Kontaktrennung der Kolben 13 bis dahin möglichst stark beschleunigt wurde und sich schnell bewegen konnte. Die Drosselwirkung dämpft somit effizient bis zum Erreichen der zweiten Schaltstellung.

Dem Umschaltsitzventil V kann mindestens eine Stelldrossel 22, 50 zugeordnet sein, um die jeweilige Umschaltgeschwindigkeit oder -zeit verstellen zu können. Die Stelldrossel 22 befindet sich in der Druckleitung 16. Die Stelldrossel 50 befindet sich in der Tankleitung.

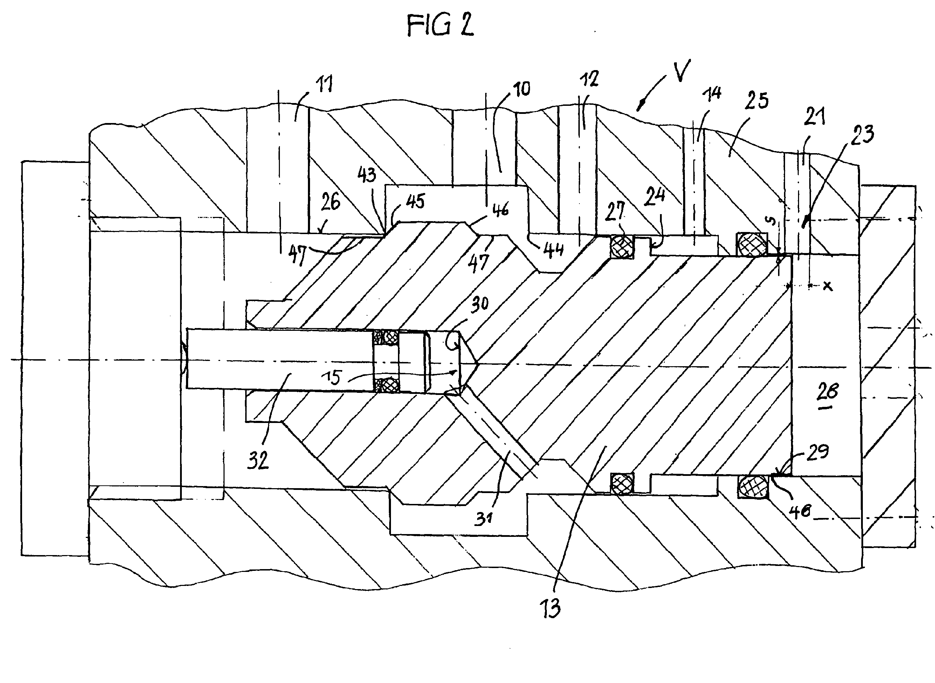

Fig. 2 zeigt in einem Längsschnitt eine Ausführungsform des Umschaltsitzventils V von Fig. 1 in der Schaltstellung mit geschlossenem Schalter S der Leistungs-Trennschaltvorrichtung T. In einem Gehäuse 25 des Umschaltsitzventils V ist zusätzlich zu den als Kanäle ausgebildeten Anschlüssen (Arbeitsanschluss 10, Tankanschluss 11, Druckanschluss 12 und Vorsteueranschluss 14) ein weiterer, einen Strömungsweg 21 definierender Tankanschluss vorgesehen, der entweder zum Tank, zur Tankleitung 17 oder im Gehäuse 25 zum Tankanschluss 11 führt. Im Gehäuse 25 ist eine beidendig verschlossene Kammer 26 für den Kolben 13 geformt, wobei im Bereich des Arbeitsanschlusses 10 zwei axial beabstandete Ventilsitze 43, 44 vorgesehen sind, die mit hier konischen Sitzflächen 45 und 46 am Kolben 13 wechselseitig zusammenwirken und die beiden Schaltstellungen definieren, in denen leckagefreie Dichtheit am jeweiligen Ventilsitz 43 oder 44 gegeben ist. Die Umschaltfläche 24 ist eine außenliegende Ringfläche am Kolben 13, die durch Dichtungen 27 gegenüber dem Druckanschluss 12 und dem Strömungsweg 21 abgedichtet ist. Zwischen dem rechtsseitigen Kolbenstirnende und dem Kammerende wird eine Kammer 28 definiert, in der ein Druckmittelvolumen enthalten ist, das bei der Bewegung des Kolbens 13 in die zweite Schaftstellung (Sitzfläche 46 gegen den Ventilsitz 44 angelegt) durch die Drosselstelle 23 über den Strömungsweg 21 zum Tank verdrängt wird. Die Drosselstelle 23 ist hier am Beginn des Strömungsweges 21 vorgesehen und wird mit einem Drosselspalt S einer vorbestimmten Weite zwischen der Innenwand der Kammer 26 in diesem Bereich und einem Drosselflächen-Abschnitt 29 der Peripherie des Kolbens 13 (eine kreiszylindrische Drosselfläche) gebildet. Im Drosselspalt S ist entweder die Peripherie des Kolbens 13 und/oder die Wand der Kammer 26 entsprechend bearbeitet. Die Drosselwirkung (Hubweg x) ist so eingestellt, dass sie erst zu wirken beginnt, wenn der Arbeitsanschluss 10 bereits mit dem Tankanschluss 11 verbunden ist.

Optional sind jeweils anschließend an die Sitzfläche 45 bzw. 46 kreiszylindrische Flächen 47 am Kolben 13 geformt, die sicherstellen, dass die Verbindung vom Arbeitsanschluss 10 zum Tankanschluss 11 bzw. vom Arbeitsanschluss 10 zum Druckanschluss 12 erst nach einem bestimmten Hubweg des Kolbens vollständig geöffnet wird, nachdem die Sitzfläche 45 bzw. 46 bereits vom Ventilsitz 43 bzw. 44 abgehoben wurde, bzw. die einen hydraulischen Kurzschluss zwischen dem Druckanschluss 12 und dem Tankanschluss 11 vermeiden.

Die an der Drosselstelle 23 abhängig vom Hub des Kolbens 13 in die zweite Schaltstellung zunehmende Drosselwirkung beruht in Fig. 2 darauf, dass bei im Wesentlichen gleichbleibendem Drosselspalt S die axiale Überdeckung zwischen der Innenwand der Kammer 26 und dem Abschnitt 29 der Peripherie des Kolbens 13 zunimmt, so dass die Kapillarlänge im Drosselspalt wächst. Auf diese Weise wird am das Druckmittelvolumen verdrängenden Kolben 13 eine zunehmende Kraft entwickelt, die der Kraft auf der ersten Umschaltfläche 15 (Grund 30 einer Sackbohrung im Kolben 13) entgegenwirkt, und das Aufsetzen der Sitzfläche 46 auf dem Ventilsitz 44 dämpft.

In der Ausführungsform in Fig. 2 entspricht das verdrängte Druckmittelvolumen dem Produkt aus der Querschnittsfläche des gesamten rechtsseitigen Kolbenstirnendes und dem Hub des Kolbens 13 bis zum Aufsetzen der Sitzfläche 46 auf dem Ventilsitz 44 (z.B. Hubweg x). Der Grund 30, der permanent über einen Kanal 31 im Kolben 13 mit dem Druck aus dem Druckanschluss 12 beaufschlagt wird, kommt dadurch zur Wirkung, dass in der Kammer 26 ein Stift 32 angeordnet und im linksseitigen Kammerende abgestützt ist, der in die Sackbohrung im Kolben 13 eintaucht und darin abgedichtet ist. Der Grund 30 kann, wie erwähnt, kleiner sein als die zweite Umschaltfläche 24.

In Fig. 2 ist am Beginn des Abschnitts 29 der Peripherie des Kolbens 13 als Detailvariante (optional) eine Schulter 48 angedeutet, an der z.B. die für die Drosselstelle 23 maßgebliche Drosselfläche beginnt. Diese Schulter 48 könnte eine Steuerfläche oder Steuerkante bilden, die mit der Mündung des Strömungsweges 21 blendenartig zusammenwirkt und mit zunehmendem Hub sozusagen flankierend mit der zunehmenden Drosselwirkung durch die wachsende axiale Überdeckung bei der Dämpfung mitwirkt. Falls die Mündung des Strömungsweges 21 in der inneren Wand der Kammer 26 eine entsprechende Länge in axialer Richtung (und/oder gegebenenfalls spezielle geometrische Form) hat und über den Hubweg des Kolbens 13 bis zum Aufsetzen der Sitzfläche 46 auf dem Ventilsitz 44 erstreckt, könnte auch nur mit der Schulter 48 die zunehmende Drosselwirkung (blendenartig) erzeugt werden. Dann könnte gegebenenfalls der Drosselspalt S weiter ausgebildet sein. Gegebenenfalls könnte in Fig. 2 sogar direkt das rechtsseitige Kolbenstirnende als Steuerfläche (analog zur Schulter 48) zur blendenartigen Zusammenwirkung mit der entsprechend lang ausgebildeten Mündung des Strömungsweges 21 verwendet werden, beispielsweise derart, dass die Peripherie des Kolbens 13 die Mündung absperrt, sobald die Sitzfläche 46 auf den Ventilsitz 44 aufgesetzt hat.

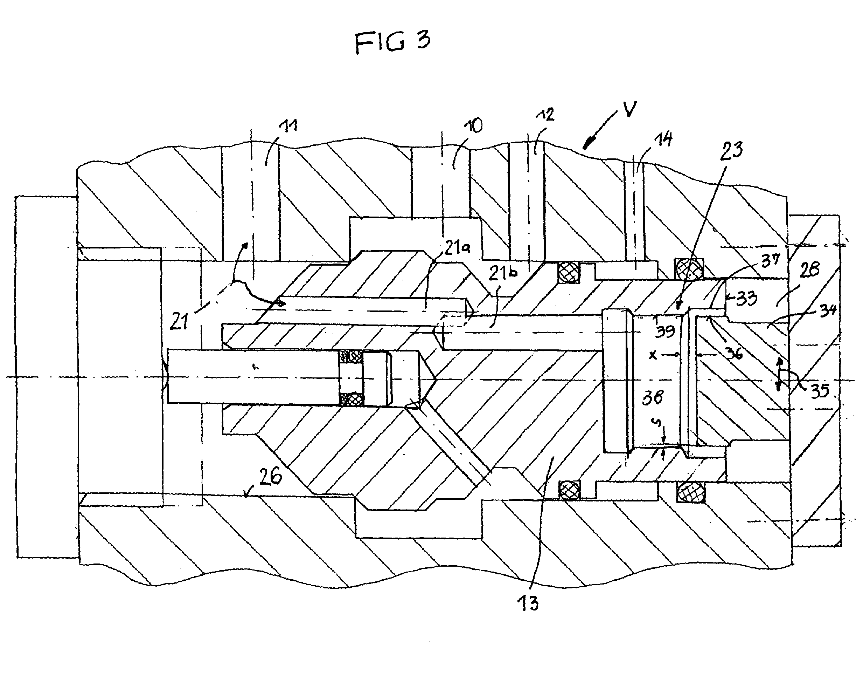

Die Ausführungsform des Umschaltsitzventils V in Fig. 3 unterscheidet sich von der der Fig. 2 u.a. dadurch, dass das zum Dämpfen über die Drosselstelle 23 verdrängte Druckmittelvolumen kleiner ist und in der hier ringförmigen Kammer 28 definiert wird, die von der Innenwand der Kammer 26, einer Ringfläche 33 am rechtsseitigen Kolbenstirnende und einem Ansatz 34 im rechtsseitigen Kammerende begrenzt wird. Zweckmäßig kann der Ansatz 34 quer zur Richtung der Achse des Kolbens 13 schwimmend abgestützt sein, wie dies durch den Doppelpfeil 35 angedeutet ist. Der Ansatz 34 taucht in eine Innenkammer 38 im Kolben 13 ein und weist im Bereich seines freien Endes eine kreiszylindrische Drosselfläche 36 (einen Bund) auf, deren axiale Länge annähernd der Tiefe der beispielsweise als Bohrung ausgebildeten Innenkammer 38 entspricht. Die Innenkammer 38 besitzt an einem Teil der Innenwand eine ebenfalls kreiszylindrische Drosselfläche 39, wobei der Drosselspalt S der Drosselstelle 23 zwischen den Drosselflächen 36, 39 gebildet wird. Der Abströmweg 21 ist in Fig. 3 zumindest zum Teil im Kolben 13 untergebracht, beispielsweise aus Platzgründen in Form zweier zur Achse des Kolbens 13 paralleler, zueinander versetzter und miteinander verschnittener Bohrungen 21 a, 21b. Der Strömungsweg 21 mündet im linksseitigen Kolbenstirnende und kommuniziert im linken Kammerende mit dem Tankanschluss 11. Zwischen den Drosselflächen 39, 36 ist ein axialer Abstand entsprechend einem Hubweg x (in der Schaltstellung von Fig. 3) vorgesehen, der sicherstellt, dass die Drosselung des bei der Bewegung des Kolbens 13 zur zweiten Schaltstellung aus der Kammer 28 verdrängten Druckmittelvolumens erst einsetzt, wenn der Arbeitsanschluss 10 bereits mit dem Tankanschluss 11 verbunden ist, aber dann über den weiteren Hub des Kolbens 13 zunehmend verstärkt wird, da die axiale Überdeckung zwischen den Drosselflächen 36, 39 bei zumindest im Wesentlichen gleichbleibendem Drosselspalt S größer wird. Der weitere Aufbau des Umschaltsitzventils V in Fig. 3 entspricht dem von Fig. 2.

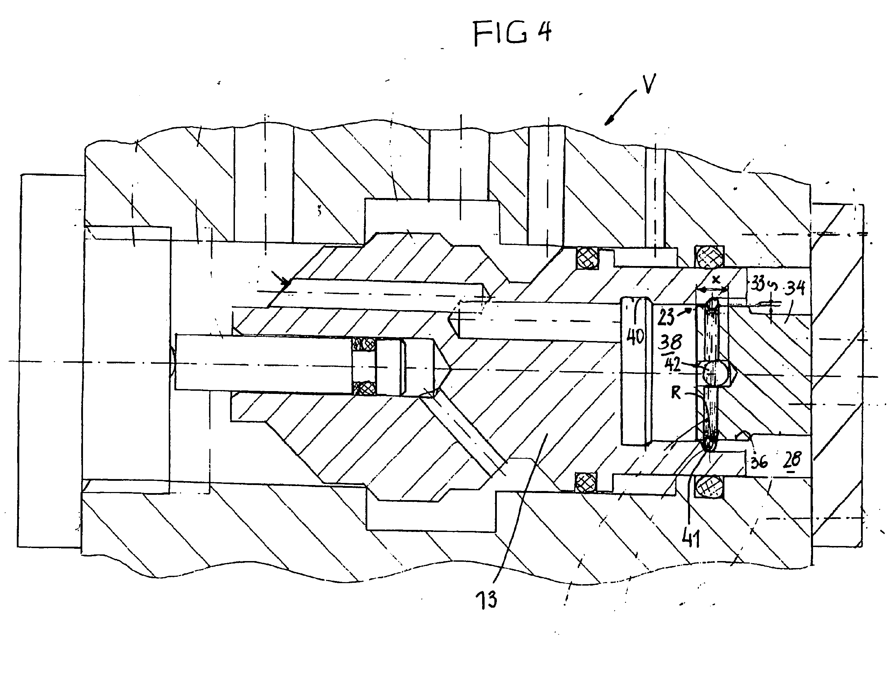

Die Ausführungsform des Umschaltsitzventils V in Fig. 4 ist der von Fig. 3 ähnlich. Als zusätzliche Maßnahme ist in Fig. 4 eine Verrastung R zwischen dem Ansatz 34 und dem Kolben 13 vorgesehen. Die Verrastung R ist beispielsweise eine Kugelverrastung, mit am Umfang des Ansatzes 34 vortretenden, federbelasteten Kugeln, die in beiden Schaltstellungen in Vertiefungen 40, 41 eingreifen und die Position des Kolbens 13 halten (Selbsthaltung in beiden Schaltstellungen). Damit die Drosselwirkung der Drosselstelle 23 erst einzusetzen beginnt, wenn der Arbeitsanschluss bereits mit dem Tankanschluss verbunden ist, während sich der Kolben 13 zur zweiten Schaltstellung bewegt, ist im freien Ende des Ansatzes 34 ein Kanal 42 mit Querbohrungen vorgesehen, der den Hubweg x definiert, nach dem die Drosselwirkung einsetzt, wobei die Drosselwirkung ab dann mit der Hubbewegung des Kolbens 13 zur zweiten Schaltstellung zunimmt.

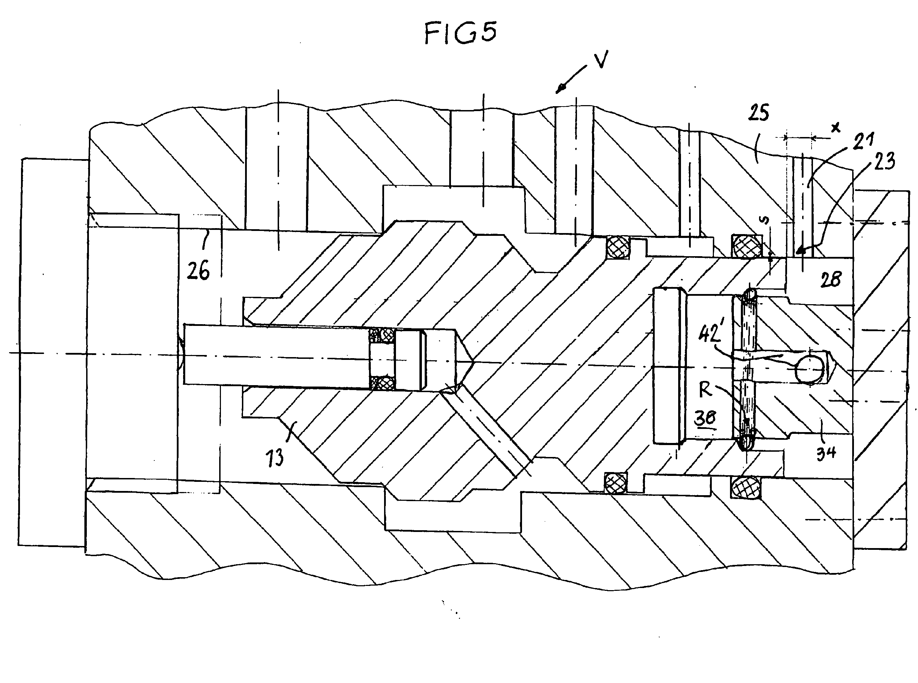

Die Ausführungsform des Umschaltsitzventils V in Fig. 5 ist der von Fig. 2 ähnlich, da der Strömungsweg 21 als weiterer Tankanschluss im Gehäuse 25 beim rechtsseitigen Kammerende angeordnet ist. Die in der Wand der Kammer 26 liegende Mündung des Strömungsweges 21 braucht nicht notwendigerweise kreisrund zu sein, sondern kann alternativ zur Beeinflussung der Drosselwirkung oder des Verlaufes der Zunahme der Drosselwirkung eine beliebige geometrische Form haben. Im Gegensatz zu Fig. 2 ist die Kammer 28 eine vom Ansatz 34 begrenzte Ringkammer, wobei an dem Ansatz 34 die Verrastung R angeordnet ist. Damit das Druckmittel auch aus der Innenkammer 38 im Wesentlichen ungedrosselt in die Kammer 28 verdrängt werden kann, ist im Ansatz 34 eine hier tiefere Bohrung 42' mit Querbohrungen vorgesehen.

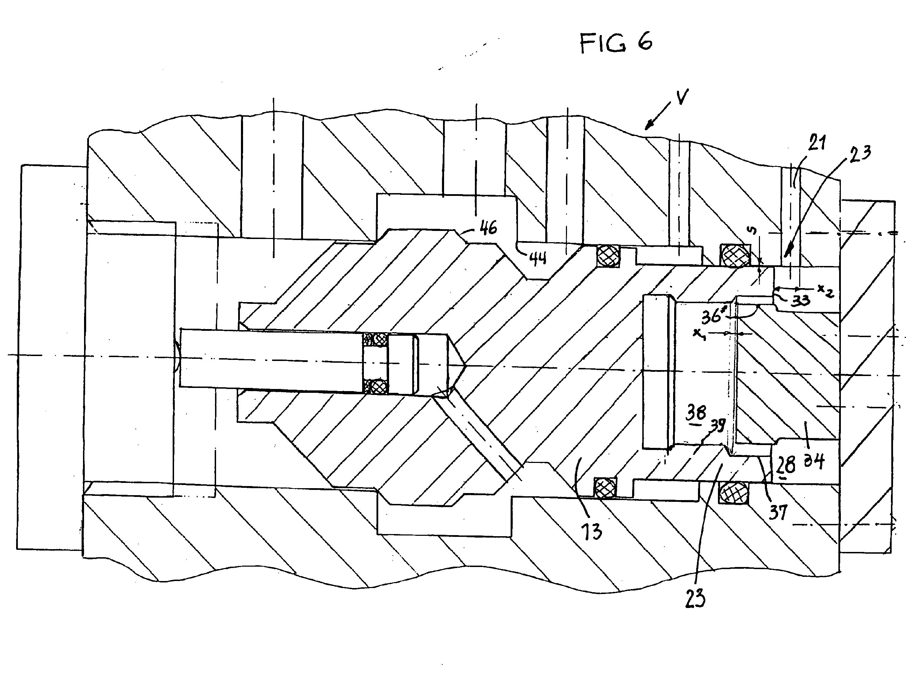

Die Ausführungsform des Umschaltsitzventils V in Fig. 6 weist in der Kammer 26 ebenfalls den in die Innenkammer 38 des Kolbens 13 eintauchenden Ansatz 34 und sogar mehr als eine (z.B. zwei) Drosselstellen 23 auf. Die erste Drosselstelle 23 für aus der Kammer 38 verdrängtes Druckmittel wird an der Mündung des Strömungsweges 21 (einem weiteren Tankanschluss im Gehäuse 25) gebildet, während die zweite Drosselstelle 23 für aus der Innenkammer 38 in die Kammer 28 verdrängtes Druckmittel zwischen dem Ansatz 34 und der Innenkammer 38 vorgesehen ist. Die Kreisringfläche 33 des rechtsseitigen Kolbenstirnendes hält in der gezeigten Schaltstellung vom hinteren Rand der Mündung des Strömungsweges 21 einen Abstand entsprechend einem Hubweg x2 für den Drosselspalt S ein, ab dem hier die Drosselung spürbar einsetzt und zunimmt. Das freie Stirnende des Ansatzes 34 bzw. der Beginn der Drosselfläche 36 haben einen Abstand entsprechend einem Hubweg x1 vom Beginn der Drosselfläche 39 in der Innenkammer 38, ab dem hier die Drosselung einsetzt und zunimmt. x1, x2 sind so gewählt, dass die Drosselwirkung erst dann einsetzt, wenn der Arbeitsanschluss bereits mit dem Tankanschluss verbunden ist, und zunimmt, bis die zweite Schaltstellung erreicht ist. Die beiden Drosselstellen 23 wirken hier als zwei Dämpfungsstufen gemeinsam, um ein hartes Aufschlagen der Sitzfläche 46 auf den Ventilsitz 44 zu vermeiden. Die eine Dämpfungsstufe setzt nach dem Hubweg x1 für aus der Innenkammer 38 in die Kammer 28 verdrängtes Druckmittel z.B. früher ein, als die nach dem Hubweg x2 einsetzende andere Dämpfungsstufe für aus der Kammer 28 in den Strömungsweg 21 verdrängtes Druckmittel.

## Patentansprüche

1. Hydraulisches Umschaltsitzventil (V) für eine Leistungs-Trennschaltvorrichtung (T), mit einem in einer Kammer (26) druckvorgesteuert linear zwischen zwei Schaltstellungen bewegbaren Kolben (13), an dem umfangsseitig Sitzflächen (45, 46) vorgesehen sind, die in den Schaltstellungen wechselseitig mit je einem von in der Kammer angeordneten Ventilsitzen (43, 44) leckagefrei absperrend zusammenwirken, wobei in die Kammer (26) ein Arbeitsanschluss (10), wenigstens ein Tankanschluss (11), ein Druckanschluss (12) sowie ein Vorsteueranschluss (14) münden, **dadurch gekennzeichnet, dass** für bei der Bewegung des Kolbens (13) in eine Schaltstellung mit einer auf einen Ventilsitz (43, 44) aufsetzenden Sitzfläche (45, 46) das von zumindest einem Teil eines Kolbenstirnendes aus dem Kammerende verdrängtes Druckmittel ein zumindest eine Drosselstelle (23) enthaltender Strömungsweg (21) zum Tank vorgesehen ist, und dass die Drosselstelle (23) zumindest zum Dämpfen des Aufsetzens der Sitzfläche auf den Ventilsitz mit in Bewegungsrichtung des Kolbens (13) in die eine den Arbeitsanschluss (10) in der Kammer (26) mit dem Tankanschluss (11) verbindende Schaltstellung hubabhängig zunehmender Drosselwirkung ausgebildet ist

2. Hydraulisches Umschaltsitzventil nach Anspruch 1, **dadurch gekennzeichnet, dass** die Drosselstelle (23) so ausgebildet ist, dass die Drosselwirkung in etwa ab einer Bewegungsphase des Kolbens (13) einsetzt und dann zunimmt, in der der Arbeitsanschluss (10) in der Kammer (26) bereits mit dem Tankanschluss (11) verbunden ist.

3. Hydraulisches Umschaltsitzventil nach Anspruch 1, **dadurch gekennzeichnet, dass** die Drosselstelle (23) im Kolben (13) angeordnet ist, und dass, vorzugsweise, der Strömungsweg (21) zum Tank von der Drosselstelle (23) im Kolben (13) zum mit dem Druck im Tankanschluss (11) beaufschlagten Kolbenstirnende verläuft.

4. Hydraulisches Umschaltsitzventil nach Anspruch 3, **dadurch gekennzeichnet, dass** im Kammerende ein stationärer Ansatz (34) angeordnet ist, der in eine im Kolbenstirnende geformte Innenkammer (38) eintaucht, dass der Ansatz (34) mit einer außenliegenden Ringfläche (33) des Kolbens (13) eine ringförmige Kammer (28) begrenzt, und dass die Drosselstelle (23) für aus der Kammer (28) in die Innenkammer (38) verdrängtes Druckmittelvolumen zwischen dem Ansatz (34) und der Innenkammer (38) gebildet ist, wobei, vorzugsweise, der Strömungsweg (21) in der Innenkammer (38) mündet.

5. Hydraulisches Umschaltsitzventil nach Anspruch 3, **dadurch gekennzeichnet, dass** der Strömungsweg (21) entweder wenigstens eine zur Achse des Kolbens (13) parallele oder eine gegenüber der Achse des Kolbens schräge Bohrung, oder je zwei gegeneinander versetzte und miteinander verschnittene Bohrungen (21 a, 21 b) aufweist.

6. Hydraulisches Umschaltsitzventil nach Anspruch 4, **dadurch gekennzeichnet, dass** der Ansatz (34) am freien Stirnende einen im Wesentlichen kreiszylindrischen Bund mit einer Drosselfläche (36) einer axialen Länge etwa entsprechend der Tiefe der als Bohrung ausgebildeten Innenkammer (38) aufweist, dass zwischen der Drosselfläche (36) und der als weitere Drosselfläche (39) dienenden Wand der Innenkammer (38) ein Drosselspalt (S) vorgesehen ist, und dass die Drosselwirkung bei in etwa gleichbleibendem Drosselspalt (S) mit hubabhängig zunehmender axialer Überdeckung im Drosselspalt zunimmt.

7. Hydraulisches Umschaltsitzventil nach Anspruch 4, **dadurch gekennzeichnet, dass** zwischen dem Ansatz (34) und dem Kolben (13) eine mechanische Verrastung (R), vorzugsweise eine federbelastete Kugelverrastung zur Positionierung des Kolbens in den beiden Schaltstellungen, vorgesehen ist.

8. Hydraulisches Umschaltsitzventil nach Anspruch 1, **dadurch gekennzeichnet, dass** die zumindest eine Drosselstelle (23) zwischen dem Kolben (13) und der Wand der Kammer (26) angeordnet ist, und dass der Strömungsweg (21) zum Tank von der Drosselstelle (23) in einem die Kammer (26) begrenzenden Gehäuse (25) verläuft, vorzugsweise als weiterer, in der Wand der Kammer beginnender Tankanschluss.

9. Hydraulisches Umschaltsitzventil nach Anspruch 8, **dadurch gekennzeichnet, dass** der Kolben (13) eine zumindest im Wesentlichen kreiszylindrische Drosselfläche (29) aufweist, die mit der Wand der Kammer (26) einen mit dem Strömungsweg (21) kommunizierenden Drosselspalt (S) für zum Strömungsweg (21) verdrängtes Druckmittel bildet, derart, dass die Drosselwirkung, bei zumindest im Wesentlichen gleichbleibendem Drosselspalt (S) mit hubabhängig zunehmender axialer Überdeckung zwischen der Drosselfläche (29) und der Wand der Kammer (26) zunimmt.

10. Hydraulisches Umschaltsitzventil nach Anspruch 8, **dadurch gekennzeichnet, dass** eine eine Steuerfläche oder Steuerkante bildende Schulter (48) am Kolben (13) vorgesehen ist, die mit zunehmender axialer Überdeckung eine Mündung des Strömungsweges (21) in der Wand der Kammer (26) blendenartig abdrosselt.

11. Hydraulisches Umschaltsitzventil nach Anspruch 8, **dadurch gekennzeichnet, dass** im Kammerende ein stationärer Ansatz (34) angeordnet ist, der in eine Innenkammer (38) im Kolben (13) eintaucht und mit einer Ringfläche (33) am Kolbenstirnende eine Kammer (28) begrenzt, und dass, vorzugsweise, zwischen dem Kolben (13) und dem Ansatz (34) eine mechanische Verrastung (R), vorzugsweise eine federbelastete Kugelverrastung zum Positionieren des Kolbens in den zwei Schaltstellungen, vorgesehen ist.

12. Hydraulisches Umschaltsitzventil nach Anspruch 11, **dadurch gekennzeichnet, dass** zwischen dem Ansatz (34) und der Innenkammer (38) im Kolben (13) eine zweite Drosselstelle (23) mit bei der Bewegung des Kolbens (13) in die zweite Schaltstellung zunehmender Drosselwirkung für aus der Innenkammer (38) in die Kammer (28) verdrängtes Druckmittel vorgesehen ist.

13. Hydraulisches Umschaltsitzventil nach Anspruch 4 oder 11, **dadurch gekennzeichnet, dass** der Ansatz (34) im Kammerende quer zur Kolbenachse schwimmend gelagert ist.

14. Hydraulisches Umschaltsitzventil nach wenigstens einem der vorhergehenden Ansprüche, **dadurch gekennzeichnet, dass** dem Umschaltsitzventil (V) druckseitig und tankseitig Stelldrosseln (50, 22) zum Einstellen der Umschaltgeschwindigkeit des Kolbens (13) zugeordnet sind.

15. Leistungs-Trennschaltvorrichtung (T), mit einem Hydraulikzylinder (Z) zum Schließen und Öffnen von Kontakten (3, 4) eines Schalters (S), wobei der Hydraulikzylinder (Z) über das druckvorgesteuerte Umschaltsitzventil (V) nach Anspruch 1 an eine Druckquelle (7, 9) und einen Tank angeschlossen ist.

## Claims

1. A hydraulic switching valve (V) for a power circuit breaker device (T), comprising a piston (13) which is pilot-actuated and linearly movable between two switching positions in a chamber (26) and on which seat surfaces (45, 46) are provided which, in the switching positions, interact reciprocally in a leakage-free and blocking manner with in each case one of the valve seats (43, 44) arranged in the chamber, wherein one working connection (10), at least one tank connection (11), one pressure connection (12) and one pilot connection (14) open out into the chamber (26), **characterized in that** for the pressure medium displaced from the chamber end by at least a portion of the piston front end during the movement of the piston (13) into a switching position having a seat surface (45, 46) that rests against a valve seat (43, 44), a flow path (21) is provided that contains at least one throttle point (23) and runs to the tank, and that the throttle point (23), at least for damping the abutment of the seat surface against the valve seat, is provided with a throttle effect that increases stroke-dependent in the movement direction of the piston (13) into the switching position connecting the working connection (10) in the chamber (26) to the tank connection (11).

2. The hydraulic switching valve according to claim 1, **characterized in that** the throttle point (23) is formed such that the throttle effect starts approximately with a movement phase of the piston (13) and then increases, wherein in said movement phase, the working connection (10) in the chamber (26) is already connected to the tank connection (11).

3. The hydraulic switching valve according to claim 1, **characterized in that** the throttle point (23) is arranged in the piston (13) and that, preferably, the flow path (21) to the tank runs from the throttle point (23) in the piston (13) to the piston front end pressurized with the pressure in the tank connection (11).

4. The hydraulic switching valve according to claim 3, **characterized in that** in the chamber end, a stationary projection (34) is arranged which plunges into an inner chamber (38) formed in the piston front end, that the projection (34) together with a peripheral annular surface (33) of the piston (13) borders an annular chamber (28), and that between the projection (34) and the inner chamber (38), the throttle point (23) is formed for a pressure medium volume displaced from the chamber (28) into the inner chamber (38), wherein, preferably, the flow path (21) opens out into the inner chamber (38).

5. The hydraulic switching valve according to claim 3, **characterized in that** the flow path (21) either has at least one bore that is parallel to the axis of the piston (13) or one bore that is oblique with respect to the axis of the piston, or in each case two bores (21a, 21b) which are offset with respect to each other or intersect each other.

6. The hydraulic switching valve according to claim 4, **characterized in that** at the free front end, the projection (34) has a substantially circular cylindrical collar with a throttle surface (36) that has an axial length corresponding approximately to the depth of the chamber formed as a bore, that a throttle gap (S) is provided between the throttle surface (36) and the inner chamber's (38) wall serving as a further throttle surface (39), and that with the throttle gap (S) remaining approximately unchanged, the throttle effect increases with stroke-dependently increasing axial overlap in the throttle gap.

7. The hydraulic switching valve according to claim 4, **characterized in that** a mechanical catch mechanism (R), preferably a spring-loaded ball catch mechanism, is provided between the projection (34) and the piston (13) for positioning the piston in both switching positions.

8. The hydraulic switching valve according to claim 1, **characterized in that** at least one throttle point (23) is arranged between the piston (13) and the wall of the chamber (26) and that the flow path (21) to the tank runs from the throttle point (23) in a housing (25) bordering the chamber (26), preferably as a further tank connection beginning in the wall of the chamber.

9. The hydraulic switching valve according to claim 8, **characterized in that** the piston (13) has an at least substantially circular cylindrical throttle surface (29) which, together with the wall of the chamber (26), forms a throttle gap (S) for the pressure means displaced to the flow path (21), said gap communicating with the flow path (21) in such a manner that with the throttle gap (S) remaining at least substantially unchanged, the throttle effect increases with stroke-dependently increasing axial overlap between the throttle surface (29) and the wall of the chamber (26).

10. The hydraulic switching valve according to claim 8, **characterized in that** a shoulder (48) forming a control area or control edge is provided on the piston (13), wherein said shoulder, with increasing axial overlap, throttles an aperture of the flow path (21) in the wall of the chamber (26) in an orifice-like manner.

11. The hydraulic switching valve according to claim 8, **characterized in that** a stationary projection (34) is arranged in the chamber end and plunges into an inner chamber (38) in the piston (13) and, together with an annular surface (33) at the piston front end, borders a chamber (28), and that, preferably, a mechanical catch mechanism (R), preferably a spring-loaded ball catch mechanism, is provided between the projection (34) and the piston (13) for positioning the piston in both switching positions.

12. The hydraulic switching valve according to claim 11, **characterized in that** between the projection (34) and the inner chamber (38) in the piston (13), a second throttle point (23) is provided for pressure means displaced from the inner chamber (38) into the chamber (28), said second throttle point providing a throttle effect that increases with the movement of the piston (13) into the second switching position.

13. The hydraulic switching valve according to claim 4 or claim 11, **characterized in that** the projection (34) in the chamber end is mounted so as to float transverse to the piston axis.

14. The hydraulic switching valve according to at least one of the preceding claims, **characterized in that** control throttles (50, 22) on the pressure side and the tank side for setting the switching speed of the piston (13) are assigned to the switching valve (V).

15. A power circuit breaker device (T), comprising a hydraulic cylinder (Z) for closing and opening contacts of a switch (S), wherein the hydraulic cylinder (Z) is connected via the pilot-actuated switching valve (V) according to claim 1 to a pressure source (7, 9) and to a tank.

## Revendications

1. Soupape à siège de commutation hydraulique (V) pour un sectionneur de puissance (T), avec un piston (13) qui est mobile linéairement entre deux positions de commutation dans une chambre (26), avec une commande pilote de pression, et sur lequel sont prévues, côté circonférence, des surfaces de siège (45, 46) qui coopèrent en alternance dans les positions de commutation, pour une action de fermeture sans fuite, avec l'un des sièges de soupape (43, 44) disposés dans la chambre (26), étant précisé qu'un raccordement de travail (10), au moins un raccordement de réservoir (11), un raccordement de pression (12) et un raccordement pilote (14) débouchent dans la chambre (26), **caractérisée en ce que** pour l'agent de pression refoulé de l'extrémité de chambre par une partie au moins d'une extrémité frontale de piston lors du déplacement du piston (13) jusqu'à une position de commutation avec une surface de siège (45, 46) posée sur un siège de soupape (43, 44), il est prévu une voie d'écoulement (21) vers le réservoir qui est pourvue d'au moins un étranglement (23), et **en ce que** l'étranglement (23), au moins pour amortir l'application de la surface de siège sur le siège de soupape, est doté d'une action d'étranglement qui augmente, en fonction de la course, dans le sens de déplacement du piston (13) vers une position de commutation qui relie le raccordement de travail (10) dans la chambre (26) au raccordement de réservoir (11).

2. Soupape à siège de commutation hydraulique selon la revendication 1, **caractérisée en ce que** l'étranglement (23) est conçu pour que l'action d'étranglement commence puis augmente à peu près à partir d'une phase de déplacement du piston (13) lors de laquelle le raccordement de travail (10) dans la chambre (26) est déjà relié au raccordement de réservoir (11).

3. Soupape à siège de commutation hydraulique selon la revendication 1, **caractérisée en ce que** l'étranglement (23) est disposé dans le piston (13) et **en ce que**, de préférence, la voie d'écoulement (21) vers le réservoir va de l'étranglement (23) dans le piston (13) jusqu'à l'extrémité frontale de piston qui est sollicitée par la pression dans le raccordement de réservoir (11).

4. Soupape à siège de commutation hydraulique selon la revendication 3, **caractérisée en ce qu'**il est prévu dans l'extrémité de chambre une saillie stationnaire (34) qui pénètre dans une chambre intérieure (38) formée dans l'extrémité frontale de piston, **en ce que** la saillie (34) délimite avec la surface annulaire extérieure (33) du piston (13) une chambre annulaire (28), et **en ce que** l'étranglement (23) pour un volume d'agent de pression refoulé dans la chambre intérieure (38) à partir de la chambre (28) est formé entre la saillie (34) et la chambre intérieure (38), étant précisé que de préférence la voie d'écoulement (21) débouche dans la chambre intérieure (38).

5. Soupape à siège de commutation hydraulique selon la revendication 3, **caractérisée en ce que** la voie d'écoulement (21) présente soit au moins un perçage parallèle à l'axe du piston (13) ou incliné par rapport à l'axe du piston, soit deux perçages (21a, 21b) qui sont décalés l'un par rapport à l'autre ou qui se recouvrent.

6. Soupape à siège de commutation hydraulique selon la revendication 4, **caractérisée en ce que** la saillie (34) présente à son extrémité frontale libre un collet globalement cylindrique rond avec une surface d'étranglement (36) d'une longueur axiale correspondant à peu près à la profondeur de la chambre intérieure (38) conçue comme un perçage, **en ce qu'**il est prévu entre la surface d'étranglement (36) et la paroi de la chambre intérieure (38) qui sert de surface d'étranglement supplémentaire (39) un interstice d'étranglement (S), et **en ce que** l'action d'étranglement, pour un interstice d'étranglement (S) à peu près constant, augmente dans ledit interstice d'étranglement au fur et à mesure que le recouvrement axial augmente en fonction de la course.

7. Soupape à siège de commutation hydraulique selon la revendication 4, **caractérisée en ce qu'**il est prévu entre la saillie (34) et le piston (13) un verrouillage mécanique (R), de préférence un verrouillage à bille contraint par ressort, pour le positionnement du piston dans les deux positions de commutation.

8. Soupape à siège de commutation hydraulique selon la revendication 1, **caractérisée en ce que** ledit étranglement (23) est disposé entre le piston (13) et la paroi de la chambre (26), et **en ce que** la voie d'écoulement (21) vers le réservoir s'étend à partir de l'étranglement (23) dans un boîtier (25) qui délimite la chambre (26), de préférence sous la forme d'un raccordement de réservoir supplémentaire qui commence dans la paroi de la chambre.

9. Soupape à siège de commutation hydraulique selon la revendication 8, **caractérisée en ce que** le piston (13) présente une surface d'étranglement (29) au moins globalement cylindrique ronde qui forme avec la paroi de la chambre (26) un interstice d'étranglement (S) qui communique avec la voie d'écoulement (21), pour l'agent de pression refoulé vers celle-ci, de telle sorte que l'action d'étranglement, pour un interstice d'étranglement (S) au moins globalement constant, augmente au fur et à mesure que le recouvrement axial augmente, en fonction de la course, entre la surface d'étranglement (29) et la paroi de la chambre (26).

10. Soupape à siège de commutation hydraulique selon la revendication 8, **caractérisée en ce qu'**il est prévu sur le piston (13) un épaulement (48) qui forme une surface de commande ou un bord de commande et qui étrangle à la manière d'un obturateur, avec un recouvrement axial croissant, un orifice au niveau duquel la voie d'écoulement (21) débouche dans la paroi de la chambre (26).

11. Soupape à siège de commutation hydraulique selon la revendication 8, **caractérisée en ce qu'**il est prévu dans l'extrémité de chambre une saillie stationnaire (34) qui pénètre dans une chambre intérieure (38) dans le piston (13) et qui délimite avec une surface annulaire (33) de l'extrémité frontale du piston une chambre (28), et **en ce qu'**il est prévu de préférence, entre le piston (13) et la saillie (34), un verrouillage mécanique (R), de préférence un verrouillage à bille contraint par ressort, pour le positionnement du piston dans les deux positions de commutation.

12. Soupape à siège de commutation hydraulique selon la revendication 11, **caractérisée en ce qu'**il est prévu entre la saillie (34) et la chambre intérieure (38) dans le piston (13) un second étranglement (23) avec une action d'étranglement qui augmente, lors du déplacement du piston (13) jusqu'à la seconde position de commutation, pour l'agent de pression refoulé dans la chambre (28) à partir de la chambre intérieure (38).

13. Soupape à siège de commutation hydraulique selon la revendication 4 ou 11, **caractérisée en ce que** la saillie (34) est montée dans l'extrémité de chambre de manière flottante transversalement par rapport à l'axe du piston.

14. Soupape à siège de commutation hydraulique selon l'une au moins des revendications précédentes, **caractérisée en ce que** des éléments d'étranglement de réglage (50, 22) pour régler la vitesse de commutation du piston (13) sont associés, côté refoulement et côté réservoir, à la soupape à siège de commutation (V).

15. Sectionneur de puissance (T) avec un vérin hydraulique (Z) pour fermer et ouvrir des contacts (3, 4) d'un commutateur (S), étant précisé que le vérin hydraulique (Z) est raccordé à une source de pression (7, 9) et à un réservoir par la soupape à siège de commutation hydraulique (V) à commande pilote de pression selon la revendication 1.
